# EUROPEAN PATENT SPECIFICATION

(11) **EP 2 990 636 B1**
(45) Date of publication and mention of the grant of the patent: **05.06.2019**
(21) Application number: 15165359.9
(22) Date of filing: 28.04.2015
(51) Int. Cl.: F02M 35/10, F02M 35/12, F02M 33/04, F02M 35/02, F02M 35/024, B01J 21/18, F16L 55/033, F24F 13/02, F16L 11/118, B01J 35/06

(54) **ANTI-POLLUTION POROUS FLEX PIPE**
PORÖSES FLEXIBLES ROHR ZUR VERSCHMUTZUNGSVERHINDERUNG
TUYAU FLEXIBLE POREUX ANTI-POLLUTION

(30) Priority: 26.08.2014 BR 102014021034
(43) Date of publication of application: 02.03.2016
(73) Proprietor: Westaflex Tubos Flexiveis Ltda., 83730 Contenda (BR)
(72) Inventor: Lepoultre, Edmond Pol Jean, 80710-420 Contenda (BR)
(74) Representative: Lorente Berges, Ana

(56) References cited:
- EP-A2- 0 837 238
- EP-A2- 1 091 155
- EP-A2- 1 191 217
- DE-A1-102010 042 424
- US-A1- 2004 118 387
- US-A1- 2005 005 770

## Description

The current invention patent refers to an anti-pollution porous flexible pipe having walls essentially comprising tapes formed by interlaced textile fibers, to which activated charcoal is added, in the form of an agglomerate, in powder or granulated, the textile tapes being wound over it and glued among it in the helical direction, forming an air conducting acoustic flexible helical pipe which is a part of the intake system of the combustion engines used by the automotive industry.

As people skilled in the art know, there are pipes, currently, which are usable in air conduction by various industries, among which the automotive industry, said pipes being porous, manufactured from textile fibers. Such pipes, by their constitution, avoid the excess diffusion of mechanical noises and avoid the use of the well-known acoustic boxes.

In the current international technology, there are flexible pipes for air conduction which are manufactured from helical juxtapositions of uniform tapes, undulated or not, of various materials, which can be glued or thermal glued among it, observing that said uniform tapes are confectioned in a metallic material, plastic material or composite fibrous material, the manufacturing process of these flexible pipes being fast, and the strength and sealing qualities of each flexible pipe occurring by the helical juxtapositions of the uniform tapes. Such air conducting helical flexible pipes have improved in the last few years in regard to acoustics.

Still regarding the state of the art, the existence of anti-pollution devices is known, coupled or not in air conducting acoustic pipes which are used mainly by the automotive industry in conducting fresh air to the combustion engine. Such pipes are rigid or flexible, the flexible ones comprising porous textile material, having helical construction or not, and the walls being partially or fully porous.

Therefore, said air conducting pipes are coupled to anti-pollution containers, internationally known by the denomination canister, which contain activated charcoal with the purpose of retaining the particles of hydrocarbons produced by a combustion engine. The containers known as canisters form a monoblock that is coupled to the air conducting pipe, absorbing the residual gases from the system.

However, in practice, there is a technological gap in connection to the elimination of environmental pollution factors. The current constructive technique applied in the air conducting pipes does not foresee that said pipes, by themselves, retain polluting hydrocarbons - produced by a combustion engine - in the walls which integrate their construction when said engine is switched off.

Consequently, for instance, undesirable gases are produced by the combustion when a vehicle's engine is switched on - badly burned in part - with hydrocarbons that are normally expelled through the tailpipe and often eliminated by catalysts. With the engine switched off, the badly burned gases, residual volatile, confined in the combustion chambers, return through the air intake pipes and migrate towards the outside. These polluting gases are spread out in the environment and breathed by whomever is nearby, even when the vehicle is parked outdoors. If the vehicle is parked inside a garage, the condition of aspiration by a human being can be highly toxic.

Document US 2004/0118387 discloses a hydrocarbon-removing componente for the intake system of na internal combustion engine having a duct with a hydrocarbon-removing material incorporated in an inner surface thereof.

Document US 2013/0276633 discloses an anular adsorber element for absorbing hydrocarbons comprising a support structure and an adsorber material.

Document US 2005/0005770 discloses a duct for the intake system of a vehicle engine having an interior, adsortive region adapted to remove contaminants from the air stream passing therethrough.

Document EP 1191217 discloses a system for minimizing evaporative fuel emissions of a vehicle having an internal combustion engine having a duct having a layer of activated carbono particles disposed on the interior of the duct for absorbing and storing fuel vapors emitted from the engine.

Document EP 1091155 discloses a flexible acoustic pipe consisting of a non-porous film surrounded by an outer porous layer and an interior porous layer.

Document EP 0837238 discloses a sound absorbing device comprising a porous sound absorbing material which is integrated in the intake system of a vehicle engine.

The anti-pollution porous flexible pipe, object of the current invention, was secretly developed and designed to remedy the inconveniences and deficiencies present in the state of the art, filling the requirements of novelty, inventive step and industrial application, since the proposed pipe - for conducting the air up to the engine - has walls comprising tapes formed by interlaced textile fibers, to which activated charcoal is added, in powder, agglomerate granulated form, the textile tapes being wound over it and glued among it in the helical direction, forming an air conducting acoustic flexible pipe which is a part of the intake system of combustion engines and which reduces environmental pollution by their composition.

The technical effect obtained by means of this invention allows for an attenuation of the acoustic waves, produced by the function of the combustion engine, to take place in the anti-pollution porous flexible pipe, which is also acoustic, simultaneously allowing for the activated charcoal, in agglomerate, powder or granulated form, added to the textile tapes, to adsorb and retain the polluting hydrocarbon particles in the body of the conducting pipe when said engine is switched off.

The construction of the anti-pollution porous flexible pipe, according to claim 1, follows the principle that its walls basically comprise tapes formed by interlaced textile fibers, which present continuous undulation - an aspect that allows for greater surface contact -, since the phenomenon of adsorption depends on the contact surface and the concentration of the activated charcoal in the textile fibers. The anti-pollution porous flexible pipe can comprise multi-layers of different materials, whether porous or not; however, the greater use of the tapes formed by interlaced textile fibers, with continuous undulation, for comprising the pipe walls, allows for a greater acoustic effect and a greater anti-pollution effect to be obtained.

When the combustion engine is switched on again, and the re-warming of the anti-pollution porous flexible pipe, object of this patent, is verified, the hydrocarbons are released from the added activated charcoal in the textile
tapes, and drawn into the combustion engine, followed by the burning of the hydrocarbon particles in the engine's combustion chamber.

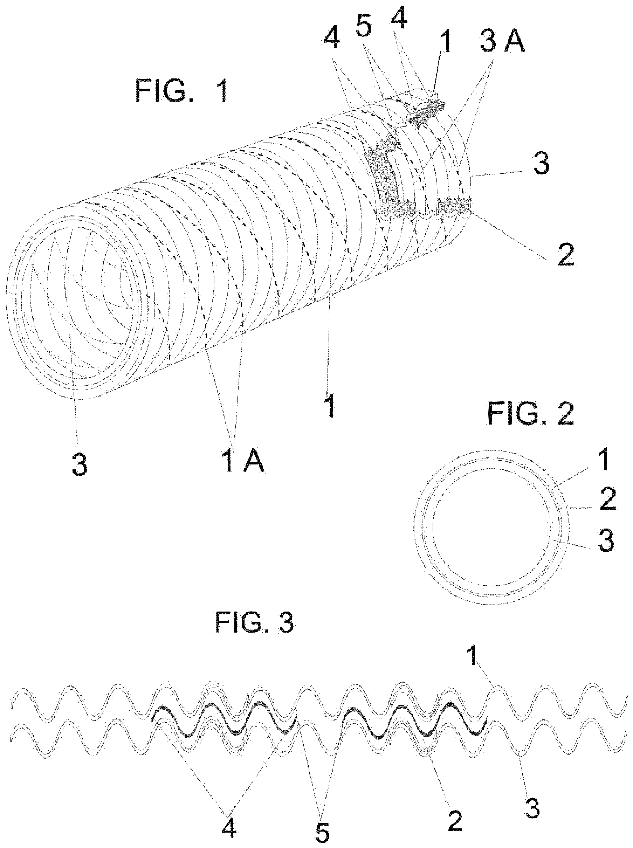

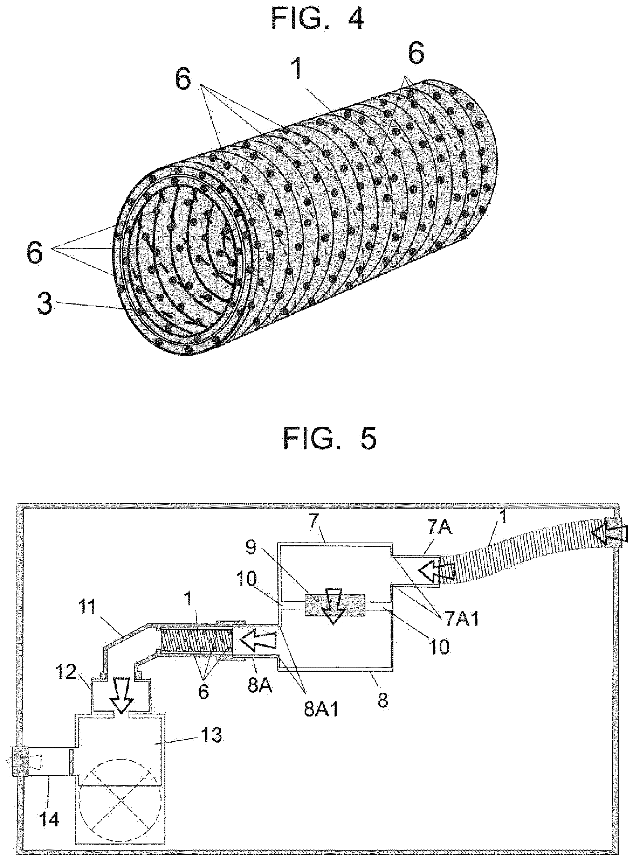

This patent can be better understood in the light of the attached drawings and their remarks, by which we have:Figure 1, shows a cut-out perspective of the anti-pollution porous flexible pipe, which in an optional embodiment presents its walls, both externally and internally comprising fibers formed by interlaced textile fibers, to which activated charcoal is added, in agglomerate, powder or granulated form, the textile tapes being wound over it to the helical direction over a support such as thermoplastic or solid material fiber,whether aluminum, PVC or other.Figure 2, shows a section view of the anti-pollution porous flexible pipe presented in Figure 1.Figure 3, shows, in longitudinal section, a part of the wall of the anti-pollution porous flexible pipe presented in Figure 1.Figure 4, shows a perspective of the anti-pollution porous flexible pipe, showing the tapes formed by interlaced textile fibers, impregnated with activated charcoal, which form its walls or its external and internal lining, according to the optional embodiment shown in Figure 1.

According to what is depicted in figures 1 to 3, an anti-pollution porous flexible pipe, also acoustic, an embodiment designed for combustion engines is shown, comprising a tape (2) of variable width and non-porous material, such as, for instance, a tape (2) made of aluminum, PVC, thermoplastic or other, with helical arrangement, intercalated and discontinued in the pipe, having wall or external lining (1) and wall or internal lining (3) with a smaller diameter , which allow for controlling the porous bands (5) in the pipe structure - for acoustic regulation -, the walls or the external (1) and/ or internal lining (3) comprising tapes (3-A) formed by interlaced textile fibers, of porous material, of variable width, wound over it and glued in the helical direction, and which are also arranged in a helical, intercalated and discontinuous manner in the pipe walls, having the textile tapes of porous material with added activated charcoal (6) in them, in agglomerate, powder or granulated form- see figure 4 -,while the tape
(2) of variable width and non porous material determines by its width or its arrangement porous bands (5) in the pipe structure.

It must be stressed that the tapes formed by interlaced textile fibers, of porous material, impregnated with activated charcoal (6) - which comprise the walls or external (1) and internal (3) lining of the anti-pollution porous flexible pipe - can be juxtaposed, interposed or intermingled with other tapes made of non porous material, for example, the aluminum tape, so as to open a space in the pipe wall.

The anti-pollution porous flexible pipe can also be embodied with only the wall or the internal lining of smaller diameter (3), comprising tapes formed by interlaced textile fibers of porous material, to which activated charcoal (6) is added in agglomerate, powder or granulated form, according to the pipe's acoustic adsorption and anti-pollution needs.

The anti-pollution porous flexible pipe is a part of the complete air intake system of a combustion engine, being appropriate for a better understanding of this invention, the attachment of the drawings that follow and their remarks:
Figure 5, shows in a schematic view the complete air intake system, having two anti-pollution porous flexible pipes integrated into it, one at the dirty air intake part and the other at the already cleaned air intake part, where the sequence of arrows shows the introduction of the air coming from the public way in the system, where the combustion engine is working and warm.

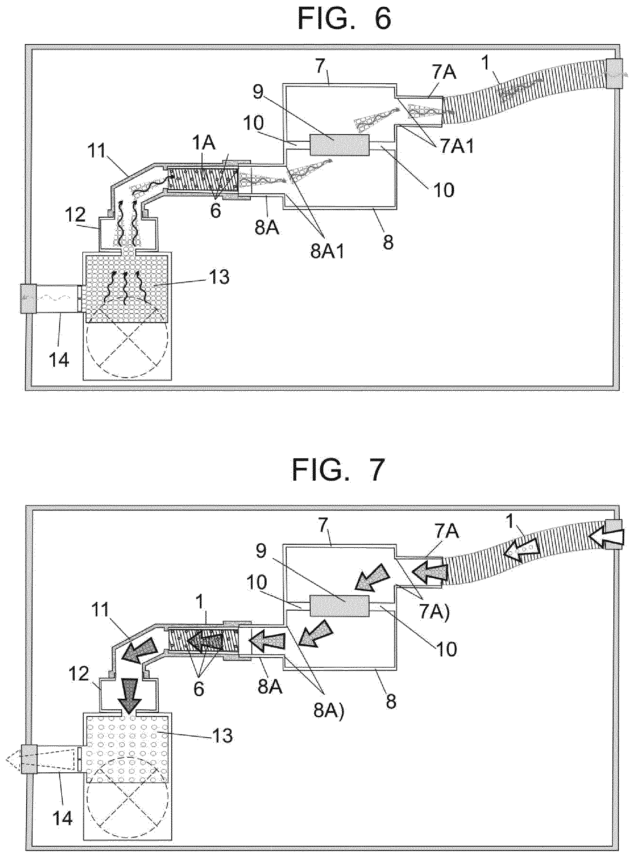

Figure 6 shows in a schematic view of the complete air intake system, having two anti-pollution porous flexible pipes integrated into it, where the combustion engine is switched off, after its operation and the engine's environment going from warm to cold, where the sequence of arrows indicates the adsorption and retention of the polluting hydrocarbon particles in the body of the air conducting pipe when said engine is switched off, due to the activated charcoal (6) in agglomerate, powder or granulated form, added in the tapes formed by interlaced textile fibers, added to the walls or the external (1) and internal (3) lining of the anti-pollution porous flexible pipe, or only the wall or internal lining (3).
Figure 7 shows in a schematic view the complete air intake system, having two anti-pollution porous flexible pipes integrated into it, where the combustion engine is switched on again and the re-warming of the anti-pollution porous pipe active, object of this patent, and as a consequence, the release of the hydrocarbons from the activated charcoal (6) in the tapes formed by interlaced textile fibers, and which are drawn into the engine, followed by the burning of the hydrocarbon particles in the engine's combustion chamber, as indicated by the sequence of arrows.

Therefore, in a complete air intake system of a combustion engine, according to what is depicted in Figures 5, 6 and 7, a first anti-pollution porous flexible pipe is shown with the numerical reference of its wall or external lining (1), having added activated charcoal (6) in agglomerate, powder or granulated form, only in the tapes formed by interlaced textile fibers of its wall or internal lining (3) of smaller diameter - this item (3) not shown in Figures 5, 6 and 7 -,said first pipe being coupled to the interior of the dirty air entrance nozzle (7-A) with a normally circular opening (7-A1) of the top compartment (7) of the air filter, which contains the filtering element (9) and its internal supports (10) arranged between the top (7) and bottom (8) compartments of the air filter, the bottom compartment having (8) clean air exit nozzle (8-A) with a normally circular opening (8-A1), to the interior of which a second antipollution porous flexible pipe is coupled, also under the numerical reference of its wall or external lining (1), having added activated charcoal (6) in agglomerate, powder or granulated form, in the tapes formed by interlaced textile fibers of its wall or external lining (1) and in the tapes formed by interlaced textile fibers of its wall or internal lining (3) of smaller diameter - this item (3) not shown in Figures 5, 6 and 7 -and the said second anti-pollution porous flexible pipe enclosed in a conventional airtight pipe (11), which is coupled to the outside of the clean air exit nozzle (8-A) and is coupled to the injection chamber (12) arranged over the combustion chamber (13) to which the tailpipe (13) is coupled.

## Claims

1. **ANTI-POLLUTION POROUS FLEXIBLE PIPE,** which is suitable for being part of an intake system used by the automotive industry, comprising a dirty air intake nozzle (7-A) with a normally circular opening (7-A1) of the top compartment (7) of an air filter, which contains a filtering element (9) and its internal supports (10) arranged between the top (7) and bottom (8) compartments of the air filter, and the bottom compartment (8) has a clean air outlet nozzle (8-A) with a normally circular opening (8-A1), with a conventional airtight pipe (11) that is coupled to the outside of the clean air outlet nozzle (8-A) and an injection chamber (12) arranged over a combustion chamber (13) to which the tailpipe (14) is coupled,
where the flexible pipe comprises a tape (2) of a non porous material which is helically arranged in the pipe between an external lining and an internal lining of said pipe, such that said tape (2) forms a porous gap (5) in the porous flexible pipe between consecutive helices of this helical arrangement,
where the external (1) and internal (3) linings comprise tapes formed by interlaced textile fibers of a porous material which are helically arranged, **characterized in that** the textile tapes of porous material of both the external lining (1) and the internal lining (3) are impregnated with activated charcoal (6) in agglomerate, powder or granulated form.

## Patentansprüche

1. **PORÖSES FLEXIBLES ROHR GEGEN UMWELTVERSCHMUTZUNG,** das als Teil eines Aufhahmesystems, wie s in der Autoindustrie genutzt wird, mit einer Aufnahmedüse für verschmutzte Luft (7-A) mit einer normalerweise kreisförmigen Öffnung (7-A1) des oberen Fachs (7) eines Luftfilters, das ein Filterelement (9) und seine internen Halterungen (10) enthält, die zwischen den oberen (7) und unteren (8) Fächern des Luftfilters angebracht sind, wobei das obere Fach (8) eine Ausgabedüse für saubere Luft (8-A) Kammer mit einer normalerweise kreisförmigen Öffnung (8-A1) mit einem konventionellen luftdichten Rohr (11), das an der Außenseite der Ausgabedüse für saubere Luft (8-A) befestigt ist, und eine Einspritzkammer (12), die über einer Verbrennungskammer (13) angeordnet ist, an der das Auspuffrohr (14) befestigt ist, aufweist,
wobei das flexible Rohr ein Band (2) aus einem nicht porösen Material umfasst, das schraubenartig zwischen einer externen Auskleidung und einer internen Auskleidung des Rohrs in diesem Rohr angeordnet ist, so dass besagtes Band (2) eine poröse Lücke (5) in dem porösen flexiblen Rohr zwischen aufeinander folgenden Spiralen dieser Schraubenanordnung bildet;
wobei die externen (1) und internen (3) **2** ┌Auskleidungen┘ **2** aus Bändern bestehen, die aus verflochtenen Textilfasern aus einem porösen Material gebildet werden, die schraubenartig angeordnet sind, das sich dadurch auszeichnet, dass die Textilbänder aus porösem Material sowohl der externen Auskleidung (1) als auch der internen Auskleidung (3) mit Aktivkohle (6) in Agglomerat-, Pulver- oder Granulatform imprägniert sind.

## Revendications

1. **TUYAU FLEXIBLE POREUX ANTI-POLLUTION,** qui convient pour être intégré dans un système d'admission utilisé par l'industrie automobile, comprenant une buse d'admission d'air sale (7-A) avec une ouverture circulaire normale (7-A1) du compartiment supérieur (7) d'un filtre à air, qui contient un élément filtrant (9) et ses supports internes (10) disposés entre la chambre supérieure (7) et la chambre inférieure (8) du filtre à air, et le compartiment inférieur (8) est équipé d'une buse de sortie d'air propre (8-A) avec une ouverture circulaire normale (8-A1), une conduite classique étanche à l'air (11) qui est accouplée à la partie extérieure de la buse de sortie d'air propre (8-A) et d'une chambre d'injection (12) disposée sur une chambre de combustion (13) à laquelle le tuyau arrière d'échappement (14) est fixé,
où le tuyau flexible comprend un ruban (2) d'un matériau non poreux qui est disposé de manière hélicoïdale dans le tuyau entre un revêtement externe et un revêtement interne dudit tuyau, de telle sorte que ledit ruban (2) forme un espace poreux (5) dans la tuyau flexible poreux entre les hélices consécutives de cette disposition hélicoïdale,
où les **2** ┌revêtements┘ **2** externe (1) et interne (3) sont constitués de bandes formées par des fibres textiles entrelacées d'un matériau poreux qui sont disposées de manière hélicoïdale, **caractérisé en ce que** les bandes textiles de matière poreuse du revêtement externe (1) et du revêtement interne (3) sont imprégnées de charbon actif (6) sous forme d'aggloméré, de poudre ou de granulés.
